# EUROPÄISCHE PATENTSCHRIFT

(11) **EP 1 965 602 B1**
(45) Veröffentlichungstag und Bekanntmachung des Hinweises auf die Patenterteilung: **14.07.2010**
(21) Anmeldenummer: 08003774.0
(22) Anmeldetag: 29.02.2008
(51) Int. Cl.: H04R 1/02, F16F 15/02

(54) **Lautsprecherbox**
Speaker
Enceinte acoustique

(30) Priorität: 02.03.2007 DE 102007010809; 07.03.2007 DE 102007011072
(43) Veröffentlichungstag der Anmeldung: 03.09.2008
(73) Patentinhaber: Finite Elemente GmbH, 59929 Brilon (DE)
(72) Erfinder: Fernandes, Luis, 59909 Bestwig (DE); Brockhoff, Bernd, 59939 Olsberg (DE)
(74) Vertreter: Brune, Axel

(56) Entgegenhaltungen:
- GB-A- 2 428 532
- US-A- 4 884 655
- US-A- 5 804 776
- US-A- 5 905 804
- US-A- 5 996 728
- US-A1- 2002 064 972
- MIKE SILVERTON: "An Infidel's glimps of Paradise: Wilson Audio's WATT/Puppy 8" LA FOLIA, ONLINE MUSIC REVIEW, [Online] 1. November 2006 (2006-11-01), XP002480732 Gefunden im Internet: URL:http://www.lafolia.com/archive/silvert on/silverton200611aninfidel.html> [gefunden am 2008-05]
- FINITE ELEMENTE: "Ceraball Universal, Press News"[Online] 1. Januar 2007 (2007-01-01), XP002480733 Gefunden im Internet: URL:http://www.finite-elemente.de/extern/n ews/200612/fi_cb-presseinfo-20061211-hi.pd f> [gefunden am 2008-05-19]
- LINKWITZ S: "LOUDSPEAKER SYSTEM DESIGN" WIRELESS WORLD, IPC BUSINESS PRESS LTD. HAYWARDS HEATH, GB, Bd. 84, Nr. 1509, 1. Mai 1978 (1978-05-01), Seiten 52-56, XP000762911 -& LINKWITZ S: "LOUDSPEAKER SYSTEM DESIGN. THREE-ENCLOSURE SYSTEM WITH ACTIVE DELAY AND CROSSOVERS - PART 2" WIRELESS WORLD, IPC BUSINESS PRESS LTD. HAYWARDS HEATH, GB, Bd. 84, Nr. 1510, 1. Juni 1978 (1978-06-01), Seiten 67-72, XP000761971 -& LINKWITZ S: "LOUDSPEAKER SYSTEM DESIGN" WIRELESS WORLD, IPC BUSINESS PRESS LTD. HAYWARDS HEATH, GB, Bd. 84, Nr. 1516, 1. Dezember 1978 (1978-12-01), Seiten 79-83, XP000761961

## Beschreibung

Die vorliegende Erfindung betrifft eine Lautsprecherbox gemäß dem Oberbegriff des Anspruchs 1.

Es ist bekannt, dass eine Lautsprecherbox aus einem ersten Gehäuse und einem zweiten Gehäuse aufgebaut sein kann, wobei das erste Gehäuse mit mindestens einem Tieftonlautsprecher (Basslautsprecher) und das zweite Gehäuse mit mindestens einem Hochtonlautsprecher und/oder einem Mitteltonlautsprecher ausgestattet ist.

Es ist ferner bekannt, dass die Gehäuse spezifische Eigenresonanzfrequenzen aufweisen. So ist für das erste Gehäuse mit dem Tieftonlautsprecher typischerweise ein Gehäuse mit einer hohen Eigenresonanzfrequenz vorgesehen, während das zweite Gehäuse für den Hochtonlautsprecher und/oder den Mitteltonlautsprecher eine tiefe Eigenresonanzfrequenz aufweisen sollte, um eine gegenseitige Beeinflussung der jeweiligen Gehäuse weitestgehend auszuschließen.

Soweit die Lautsprecherbox jedoch aus zwei verbundenen Gehäusen bestehen soll, müssen die Gehäuse mechanisch miteinander verbunden werden. Durch die mechanische Verbindung werden jedoch Brücken geschaffen, die Schwingungen zwischen den Gehäusen übertragen können. Im Ergebnis wird eine Schwingung niedriger Frequenz von dem Tieftongehäuse auf das Hoch-Mitteltongehäuse übertragen, welches jedoch eine tiefe Resonanzfrequenz aufweist. Ebenso werden entsprechend hohe Frequenzen von dem Hoch-Mitteltongehäuse auf das Tieftongehäuse mit der hohen Resonanzfrequenz übertragen. In beiden Fällen würde sich ein unerwünschtes Schwingungsverhalten der jeweiligen Gehäuse ergeben, welches es zu vermeiden gilt.

Aus der GB 2 428 532 A ist eine Lautsprecherbox bekannt geworden, deren Gehäuse aus einem Materialmix, bestehend aus einem Acrylharz und einem mineralischen Material hergestellt ist. Als Acrylharz kommt insbesondere PolyMethyl MethAcrylate (PMMA) und als mineralisches Material beispielsweise Aluminium TriHydrate (ATH) in Betracht. Die Lautsprecherbox ist sehr aufwendig ausgestaltet. Es sind beispielsweise getrennte Gehäuse für den Hoch-, Mittel- und Basslautsprecher vorgesehen, die aus dem vorgenannten Materialien gefertigt sind. Es ist anzunehmen, dass sich eine derartig ausgestaltete Lautsprecherbox durch eine geringe Beeinflussung der Gehäuse durch Schwingungen des jeweils anderen Gehäuses auszeichnet. Es ist jedoch ebenfalls anzunehmen, dass eine derartige Lautsprecherbox sehr kostspielig in der Herstellung sein wird.

Eine weitere Lautsprecherbox ist aus dem Artikel Wilson Audio Watt/Puppy 8 (abrufbar unter: www.lafolia.com/archive/silverton/silverton200611anifidel.html) bekannt geworden. Hier wird eine Entkopplung eines ersten Gehäuses mit Basslautsprechern und eines zweiten Gehäuses mit Hochton- und Mitteltonlautsprechern mittels "Spikes" vorgenommen. Das zweite Gehäuse steht dabei auf dem ersten Gehäuse, wobei die Spikes unterhalb des zweiten Gehäuses angeordnet sind.

Aus der US 905 804 A ist ferner bekannt geworden, dass die Spikes auch durch Stellfüße gebildet werden können, die mit Keramikkugeln ausgestattet sind.

Die Aufgabe der vorliegenden Erfindung liegt darin, eine Lautsprecherbox, umfassend ein erstes Gehäuse und ein zweites Gehäuse, vorzuschlagen, wobei das erste Gehäuse mit mindestens einem Tieftonlautsprecher (Basslautsprecher) und das zweite Gehäuse mit mindestens einem Hochtonlautsprecher und/oder einem Mitteltonlautsprecher ausgestattet ist, welche sich durch eine geringe Beeinflussung der Gehäuse durch Schwingungen des jeweils anderen Gehäuses auszeichnet.

Erfindungsgemäß wird diese Aufgabe durch eine Lautsprecherbox mit den kennzeichnenden Merkmalen des Anspruchs 1 gelöst, indem das erste Gehäuse mit dem zweiten Gehäuse verbunden ist, wobei das erste Gehäuse und das zweite Gehäuse in einer Gebrauchsstellung jeweils eine vertikale Anschlussplatte aufweisen, wobei zwischen dem ersten Gehäuse und dem zweiten Gehäuse mindestens ein Keramikelement vorgesehen ist, wobei es sich bei dem Keramikelement um eine Keramikkugel handelt, wobei das mindestens eine Keramikelement zwischen den vertikalen Anschlussplatten angeordnet ist.. Hierdurch kann eine in der Größe der Anlagefläche reduzierte Verbindung zwischen den Gehäusen hergestellt werden, die eine gegenseitige Beeinflussung der Gehäuse durch Schwingungen weitestgehend minimiert. Insgesamt kann der Klang einer derart ausgestalteten Lautsprecherbox verbessert werden. , Dadurch, dass das Keramikelement als Keramikkugel ausgestaltet ist, wird eine definierte und reduzierte Anlagefläche für das Keramikelement gegenüber den Gehäusen bereitgestellt.

In einer bevorzugten Ausführungsform kann vorgesehen sein, dass zur Aufnahme der Keramikkugeln spezielle Anschlussplatten vorgesehen sind. Die Anschlussplatten sind entsprechend an den gegenüberliegenden Seitenwänden der Gehäuse montiert. Die Aussparungen für die Keramikkugeln können entsprechend in die Anschlussplatten eingebracht werden und müssen nicht zwangsläufig in die Seitenwände der Gehäuse eingebracht werden. Grundsätzlich kann ein ausgewähltes Material für die Anschlussplatten verwendet werden, welches sich von dem Gehäusematerial unterscheidet.

Zur Verbindung der Gehäuse ist vorzugsweise ein besonderes Verbindungsmittel vorgesehen, welches vorteilhafterweise einen Bolzen, einen Hohlzylinder, ein Axialkugellager und eine Mutter aufweist, wobei der Hohlzylinder mit einem Gehäuse, vorzugsweise dem ersten Gehäuse, verbunden ist, wobei der Bolzen mit dem anderen Gehäuse, vorzugsweise dem zweiten Gehäuse, verbunden ist, wobei der Bolzen verschiebbar innerhalb des Hohlzylinders aufgenommen ist und ein Ende mit einem ersten Gewinde aufweist, welches aus dem Hohlzylinder hervorsteht, wobei eine Mutter auf dem Gewinde aufgeschraubt ist, wobei das Axialkugellager zwischen der Mutter und dem Hohlzylinder angeordnet ist. Über eine derartige Anordnung können die Keramikkugeln zwischen den Gehäusen, insbesondere zwischen den Anschlussplatten eingespannt werden. Im Ergebnis wird das zweite Gehäuse an dem ersten Gehäuse lediglich über Kugelelemente befestigt, insbesondere da das Verbindungsmittel ebenfalls Kugelelemente in Form der Kugeln des Axialkugellagers aufweist.

Es kann insbesondere weiterhin vorteilhafterweise vorgesehen sein, dass das Verbindungsmittel mit einem Korb zum luftdichten Verschluss des Gehäuses im Bereich des Verbindungsmittels ausgestattet ist. Auf diese Weise wird sichergestellt, dass keine durch Schalldruck bewegte Luft über die Öffnungen für die Verbindungsmittel bzw. über das Verbindungsmittel selbst, aus den Gehäusen entweichen kann.

Auch kann vorteilhafterweise vorgesehen sein, dass die Lautsprecherbox mit Keramikkugel-Stellfüßen ausgestattet ist, die vorzugsweise in den Sockel eingebaut sind. Auch hierdurch kann der Klang der Lautsprecherbox weiter verbessert werden.

Weitere vorteilhafte Ausgestaltungen der vorgeschlagenen Erfindung ergeben sich aus den Merkmalen der rückbezogenen Ansprüche.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen.
- Fig. 1: eine erfindungsgemäße Lautsprecherbox in einer perspektivischen Ansicht;
- Fig. 2: eine erfindungsgemäße Lautsprecherbox in einer perspektivischen Ansicht (mit Blende);
- Fig. 3: eine erfindungsgemäße Lautsprecherbox in einer Frontansicht;
- Fig. 4: eine erfindungsgemäße Lautsprecherbox in einer Frontansicht (mit Blende);
- Fig. 5: eine erfindungsgemäße Lautsprecherbox in einer Seitenansicht;
- Fig. 6: eine erfindungsgemäße Lautsprecherbox in einer Seitenansicht (mit Blende);
- Fig. 7: eine erfindungsgemäße Lautsprecherbox in einer Rückansicht;
- Fig. 8: eine erfindungsgemäße Lautsprecherbox in einer Rückansicht (mit Blende);
- Fig. 9: eine erfindungsgemäße Lautsprecherbox in einer Seitenansicht;
- Fig. 10: eine erfindungsgemäße Lautsprecherbox in einer Seitenansicht (mit Blende);
- Fig. 11: eine erfindungsgemäße Lautsprecherbox in einer Draufsicht;
- Fig. 12: eine erfindungsgemäße Lautsprecherbox in einer Draufsicht (mit Blende);
- Fig. 13: eine erfindungsgemäße Lautsprecherbox in einer Seitenansicht (Korpus ohne Lautsprecher);
- Fig. 14: eine erfindungsgemäße Lautsprecherbox in einer Frontansicht (Korpus ohne Lautsprecher bzw. Typentafel);
- Fig. 15: eine erfindungsgemäße Lautsprecherbox in einer Draufsicht (Korpus ohne Lautsprecher);
- Fig. 16: eine erfindungsgemäße Lautsprecherbox in einer Schnittdarstellung (Korpus ohne Lautsprecher);
- Fig. 17: eine erfindungsgemäße Lautsprecherbox in einer Schnittdarstellung (Korpus ohne Lautsprecher);
- Fig. 18: eine erfindungsgemäße Lautsprecherbox in einer Schnittdarstellung (Korpus ohne Lautsprecher);
- Fig. 19: eine erfindungsgemäße Lautsprecherbox in einer Schnittdarstellung (Korpus ohne Lautsprecher);
- Fig. 20: eine erfindungsgemäße Lautsprecherbox in einer Schnittdarstellung (Korpus ohne Lautsprecher);
- Fig. 21: eine erfindungsgemäße Lautsprecherbox in einer Schnittdarstellung (Korpus ohne Lautsprecher);
- Fig. 22: eine erfindungsgemäße Lautsprecherbox in einer Schnittdarstellung (Korpus ohne Lautsprecher);
- Fig. 23: eine Anschlussplatte des ersten Gehäuses (Tiefton) in einer Frontansicht;
- Fig. 24: eine Anschlussplatte des ersten Gehäuses (Tiefton) in einer Schnittansicht;
- Fig. 25: eine Anschlussplatte des ersten Gehäuses (Tiefton) in einer Schnittansicht;
- Fig. 26: eine Anschlussplatte des ersten Gehäuses (Tiefton) in einer Schnittansicht;
- Fig. 27: eine Anschlussplatte des zweiten Gehäuses (Mittel- und Hochton) in einer Frontansicht;
- Fig. 28: eine Anschlussplatte des zweiten Gehäuses (Mittel- und Hochton) in einer Schnittansicht;
- Fig. 29: eine Anschlussplatte des zweiten Gehäuses (Mittel- und Hochton) in einer Schnittansicht;
- Fig. 30: eine Anschlussplatte des zweiten Gehäuses (Mittel- und Hochton) in einer Schnittansicht;
- Fig. 31: eine perspektivische, teilweise transparente Darstellung einer erfindungsgemäßen Lautsprecherbox;
- Fig. 32: eine perspektivische, teilweise transparente Darstellung einer erfindungsgemäßen Lautsprecherbox;
- Fig. 33: eine perspektivische, teilweise transparente Darstellung einer erfindungsgemäßen Lautsprecherbox (vergrößerter Ausschnitt);
- Fig. 34: eine perspektivische, teilweise transparente Darstellung einer erfindungsgemäßen Lautsprecherbox (vergrößerter Ausschnitt);
- Fig. 35: eine perspektivische, teilweise transparente Darstellung einer erfindungsgemäßen Lautsprecherbox (vergrößerter Ausschnitt);
- Fig. 36: eine perspektivische, teilweise transparente Darstellung einer erfindungsgemäßen Lautsprecherbox (vergrößerter Ausschnitt);

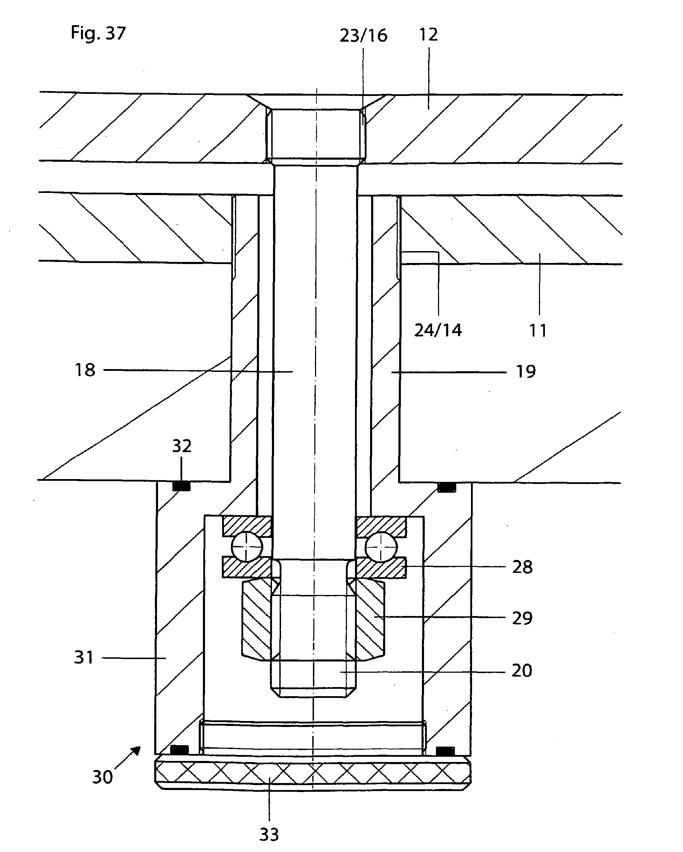

- Fig. 37: ein Verbindungsmittel für eine erfindungsgemäße Lautsprecherbox.

### In den Zeichnungen werden nachfolgende Bezugszeichen verwendet:

- 1: erstes Gehäuse (Tiefton)
- 2: zweites Gehäuse (Hoch- / Mittelton)
- 3: Keramikkugel (zwischen den Gehäusen / Anschlussplatten)
- 4: Verbindungsmittel
- 5: Keramikkugel-Stellfüße
- 6: Tieftonlautsprecher
- 7: Mitteltonlautsprecher
- 8: Hochtonlautsprecher
- 9: Sockel
- 10: Blende
- 11: Anschlussplatte des ersten Gehäuses
- 12: Anschlussplatte des zweiten Gehäuses
- 13: Befestigungsbohrungen (erste Anschlussplatte)
- 14: Verbindungsmittelgewindebohrungen (erste Anschlussplatte)
- 15: Befestigungsbohrungen (zweite Anschlussplatte)
- 16: Verbindungsmittelgewindebohrungen (zweite Anschlussplatte)
- 17: Schrauben zur Befestigung der Anschlussplatten
- 18: Bolzen
- 19: Hohlzylinder
- 20: Erstes Bolzengewinde
- 21: Aufnahme für Keramikkugel (erste Anschlussplatte)
- 22: Aufnahme für Keramikkugel (zweite Anschlussplatte)
- 23: Zweites Bolzengewinde
- 24: Zylindergewinde
- 25: Erstes Stellfußelement
- 26: Zweites Stellfußelement
- 27: Keramikkugel (für den Stellfuß)
- 28: Axialkugellager
- 29: Mutter
- 30: Korb
- 31: Gehäuse
- 32: Dichtung
- 33: Pfropfen

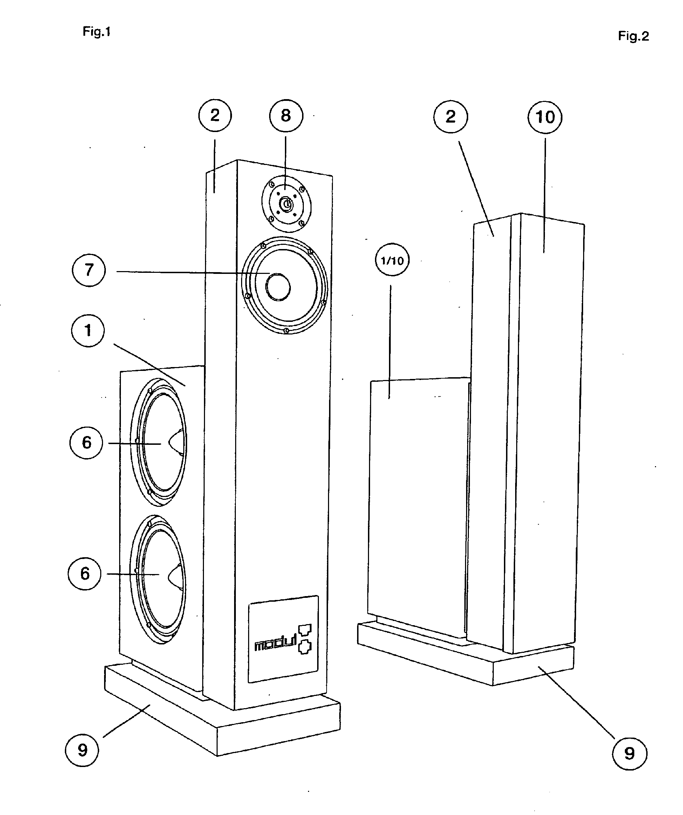

Zunächst wird auf Fig. 1 Bezug genommen.

Eine erfindungsgemäße Lautsprecherbox weist im Wesentlichen ein erstes Gehäuse 1 mit zwei Basslautsprechern 6, sowie ein zweites Gehäuse 2 mit einem Mitteltonlautsprecher 7 und einem Hochtonlautsprecher 8 auf. Ferner weist die Lautsprecherbox einen Sockel 9 auf.

Aus den Figuren ist zu erkennen, dass das erste Gehäuse 1 auf dem Sockel 9 montiert ist, wohingegen das zweite Gehäuse 2 mit dem ersten Gehäuse 1, jedoch nicht mit dem Sockel 9 verbunden ist.

Die kastenförmigen Gehäuse 1, 2 der erfindungsgemäßen Lautsprecherbox bestehen im Wesentlichen aus plattenförmigen Gehäusewänden. Auf der Anschlussseite der Gehäuse 1, 2, d.h. an den sich gegenüberstehenden plattenförmigen Gehäusewänden, ist jeweils eine Anschlussplatte 11 an dem ersten Gehäuse 1 und eine Anschlussplatte 12 an dem zweiten Gehäuse 2 angebracht, auf die unten noch näher eingegangen werden wird.

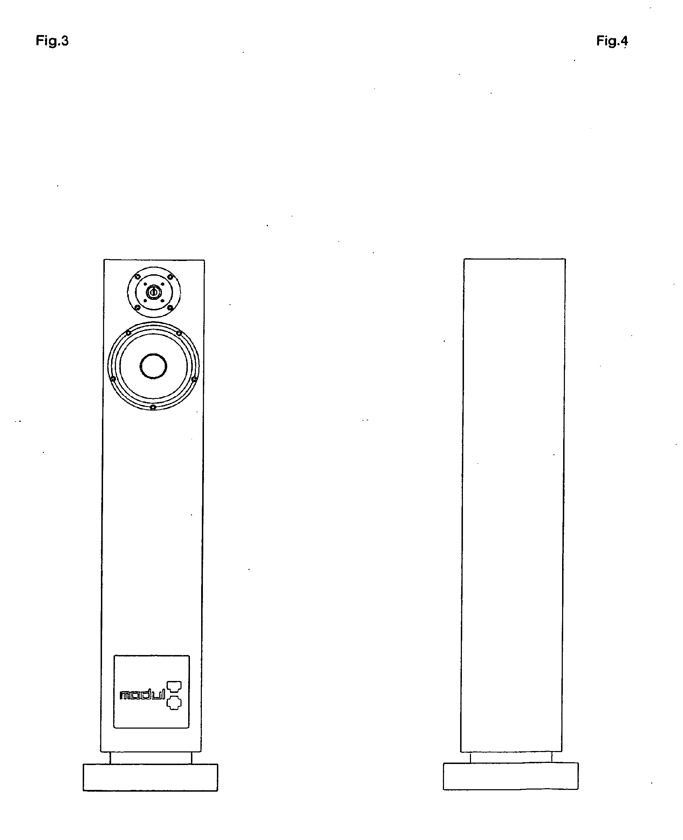

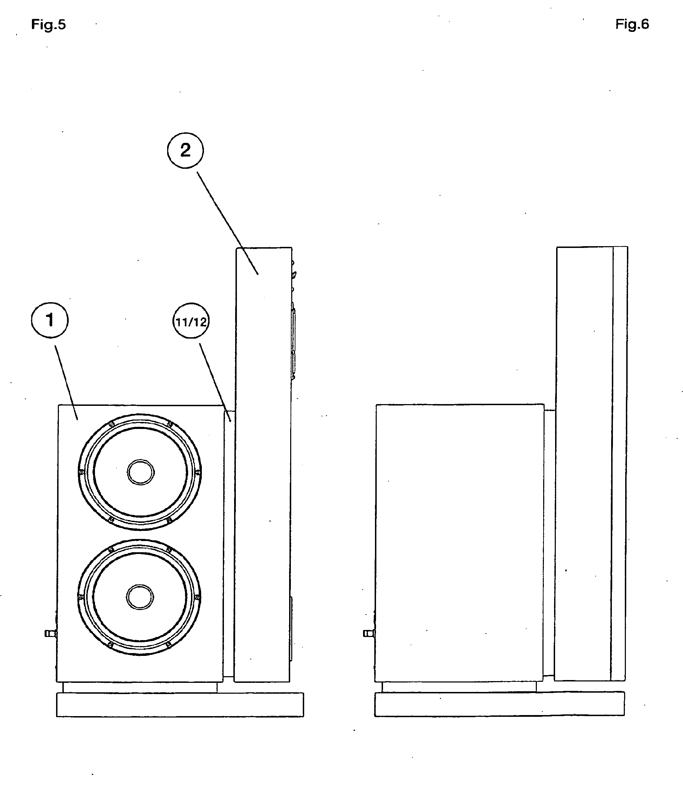

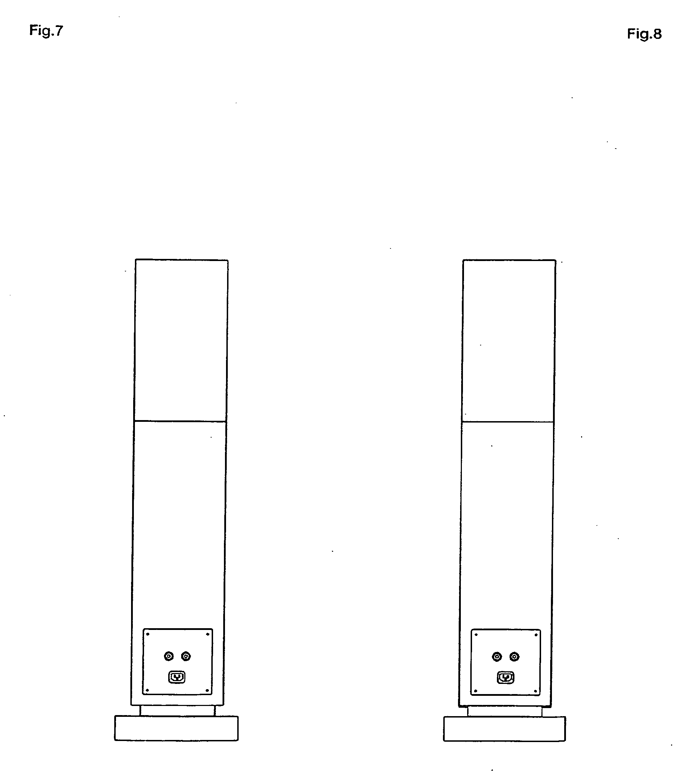

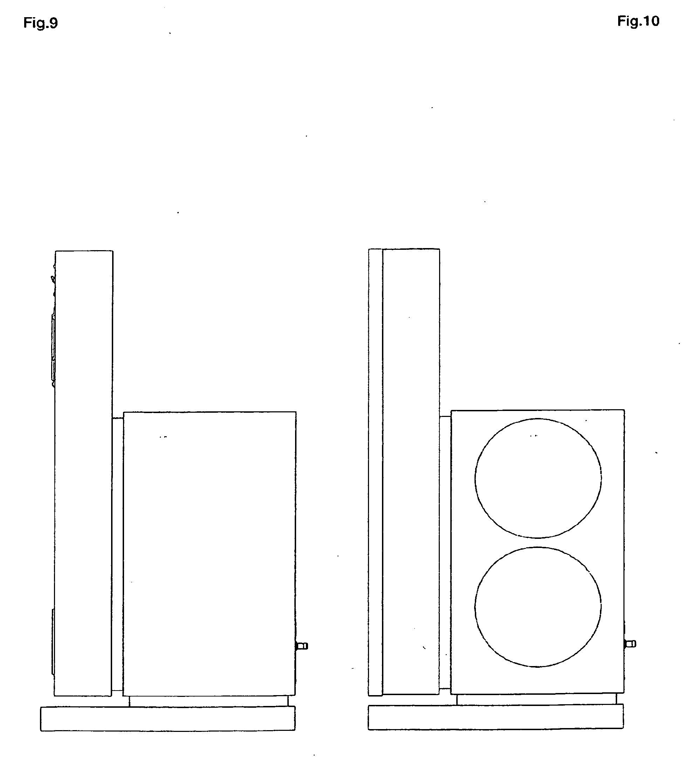

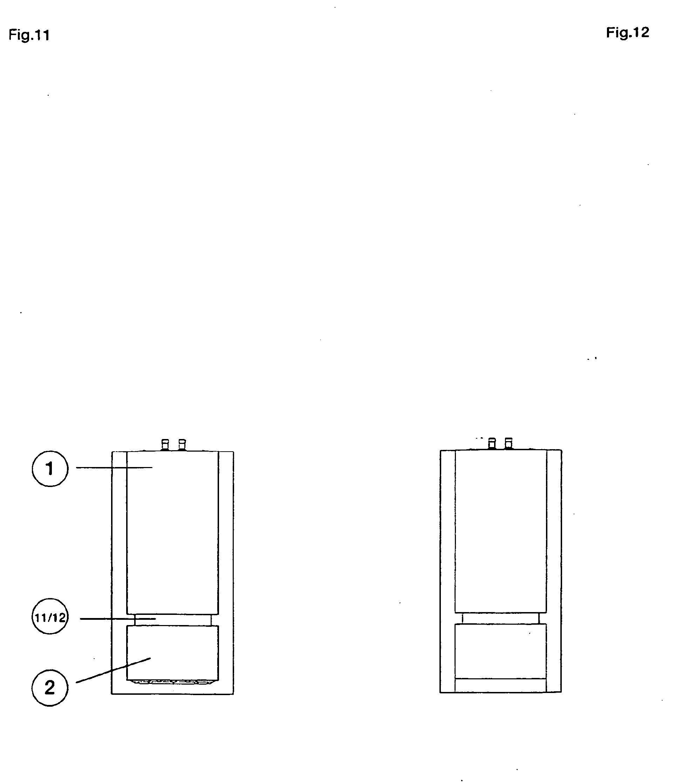

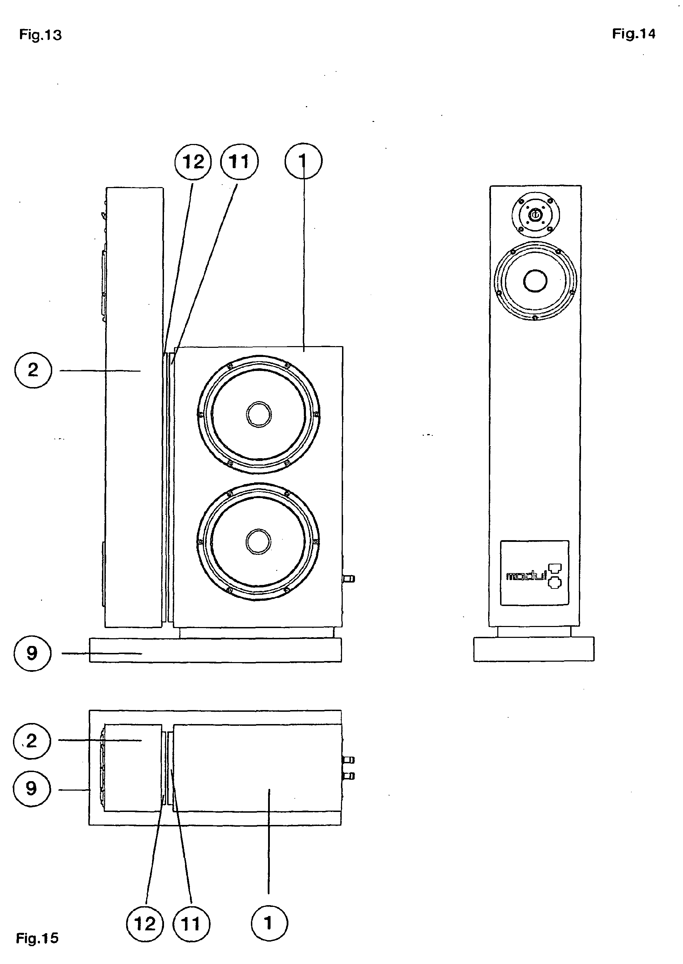

Wahlweise kann, wie unter anderem in den Fig. 1 und 2 angedeutet, eine Blende 10 vorgesehen sein, die beispielsweise als stoffbespannter Rahmen ausgestaltet ist und vor den Seitenwänden der Gehäuse 1, 2 mit den Lautsprechern angebracht ist. In den Fig. 3 bis 12 sind entsprechende Ansichten der erfindungsgemäßen Lautsprecherbox abgebildet, die jeweils mit und ohne Blende dargestellt sind. Ferner ist hier auch sehr gut erkennbar, dass das zweite Gehäuse 2 lediglich an dem ersten Gehäuse 1 angebracht ist und gewissermaßen über dem Sockel 9 "schwebt". Weitere Details lassen sich ferner aus den Fig. 13 bis 15 erkennen, bei denen auf die Lautsprecher und eine Typentafel zu illustrativen Zwecken verzichtet worden ist.

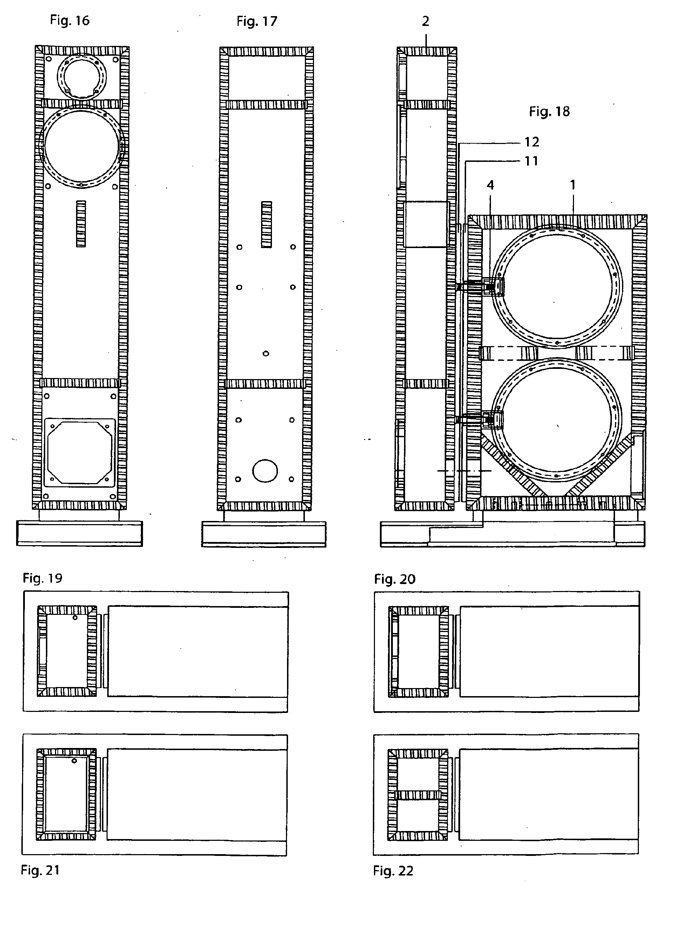

Ebenso zeigen die Fig. 16 bis 22 entsprechende Schnittdarstellungen der erfindungsgemäßen Lautsprecherboxen, wobei auch hier zu illustrativen Zwecken auf die Darstellung der Lautsprecher verzichtet worden ist. Erkennbar sind jedoch Verbindungsmittel 4, mit denen das zweite Gehäuse 2 an dem ersten Gehäuse 1 befestigt ist.

Sehr gut ist insbesondere in Fig. 18, zu erkennen, dass die Anschlussplatten 11, 12 zwischen den jeweils gegenüberliegenden Gehäusewänden der Gehäuse 1, 2 angebracht sind.

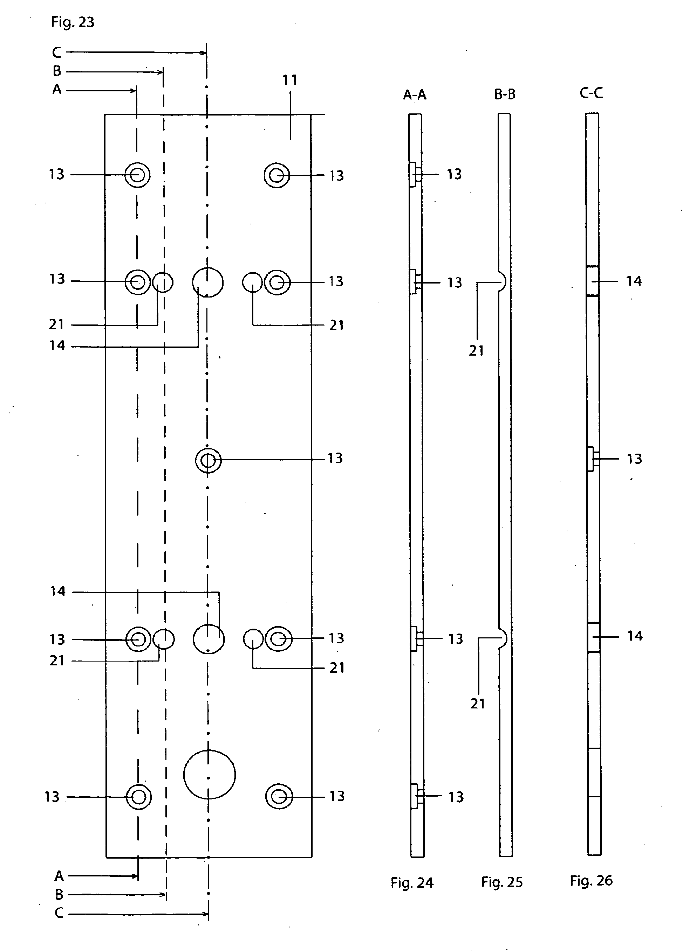

Die Ausgestaltung der Anschlussplatte 11 des ersten Gehäuses 1 ist insbesondere den Fig. 23 bis 26 zu entnehmen. Bei der Anschlussplatte 11 handelt es sich im Wesentlichen um eine rechteckförmige Platte mit einer Anzahl von Bohrungen und Aussparungen. Es sind insbesondere Befestigungsbohrungen 13, halbkugelförmige Aussparungen 21 zur Aufnahme von Keramikkugeln, als auch Verbindungsmittelgewindebohrungen 14 vorgesehen.

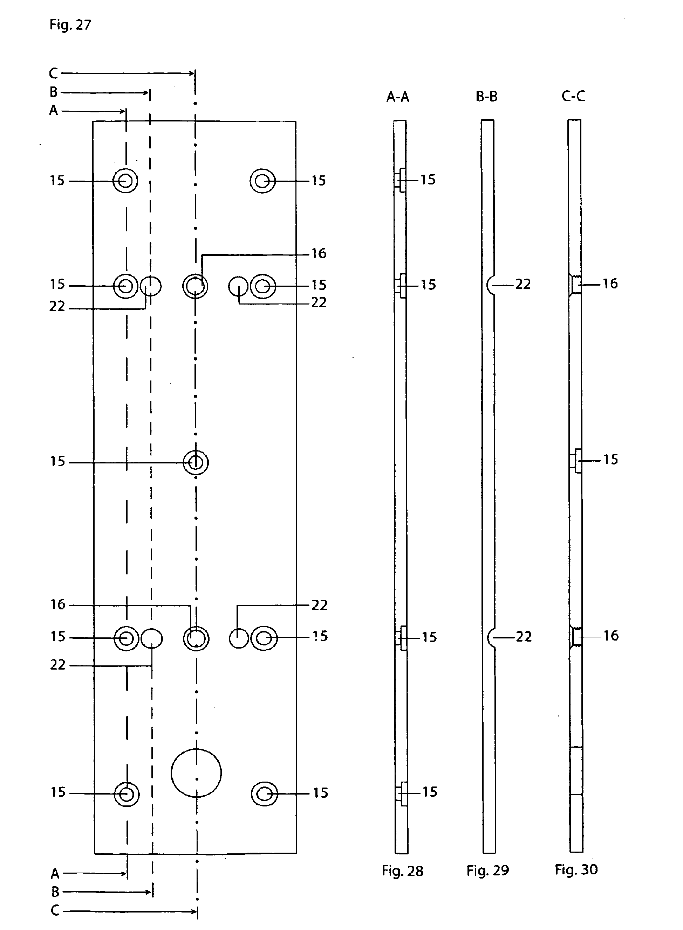

Die Ausgestaltung der Anschlussplatte 12 des zweiten Gehäuses 2 ist insbesondere den Fig. 27 bis 30 zu entnehmen. Bei der Anschlussplatte 12 handelt es sich im Wesentlichen um eine rechteckförmige Platte mit einer Anzahl von Bohrungen und Aussparungen. Es sind insbesondere Befestigungsbohrungen 15, halbkugelförmige Aussparungen 22 zur Aufnahme von Keramikkugeln, als auch Verbindungsgewindebohrungen 16 vorgesehen.

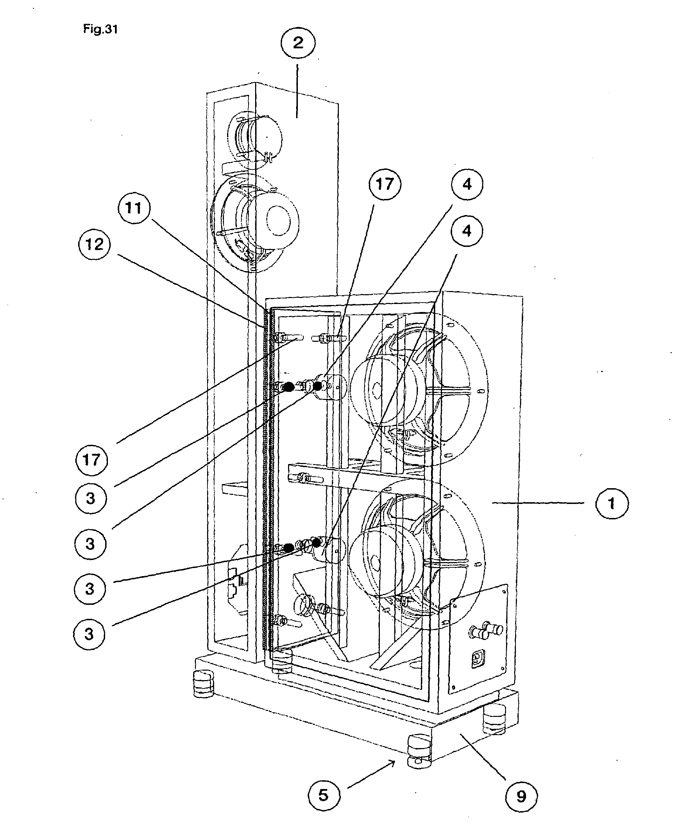

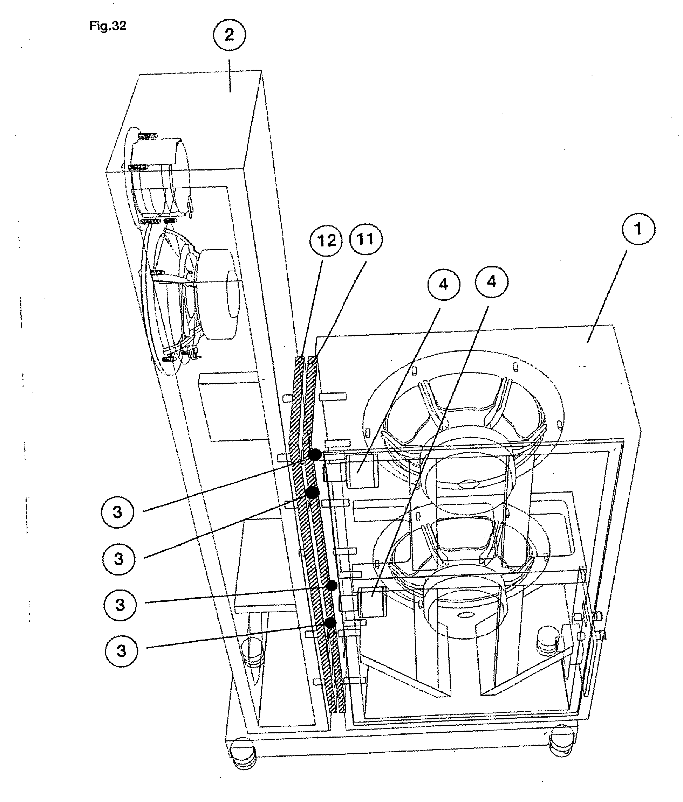

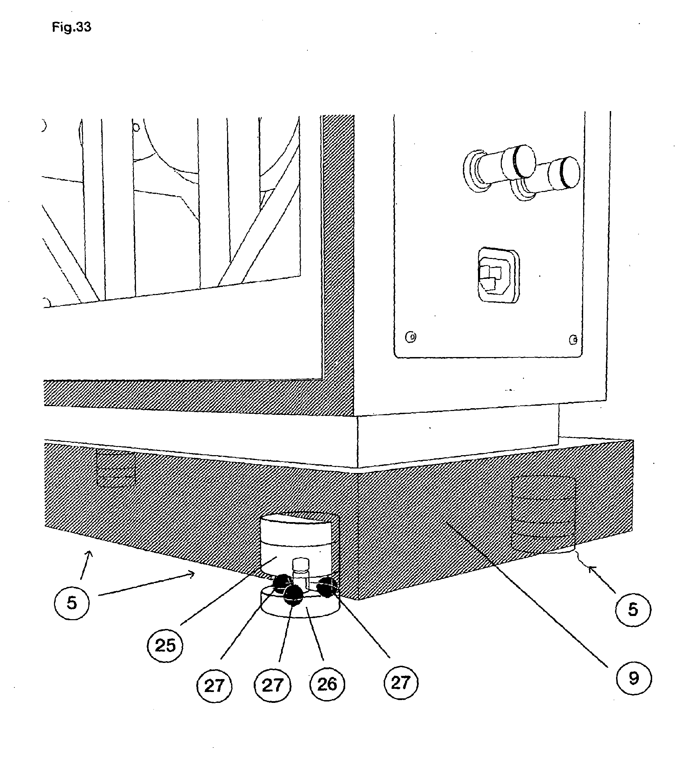

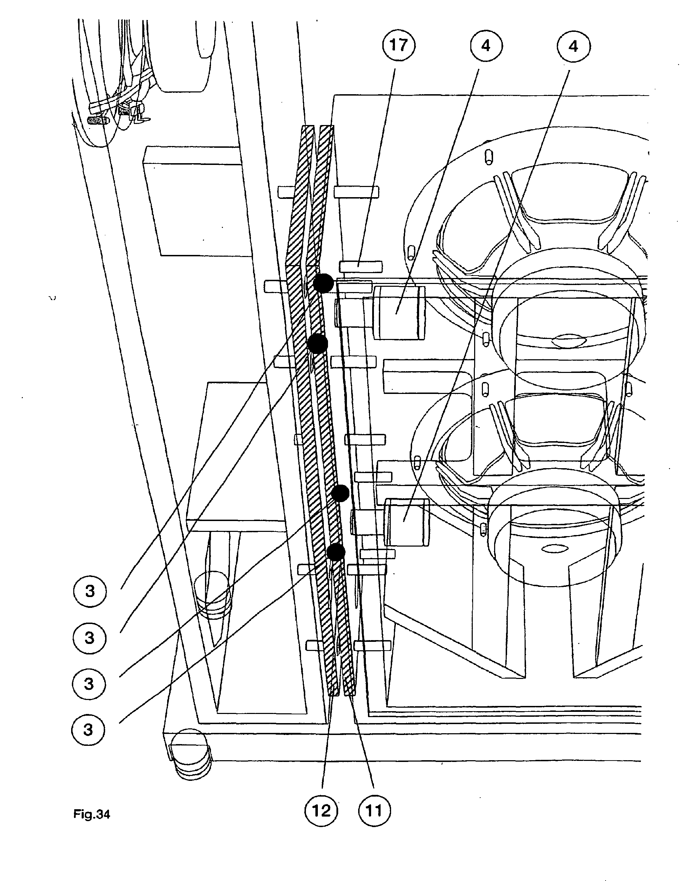

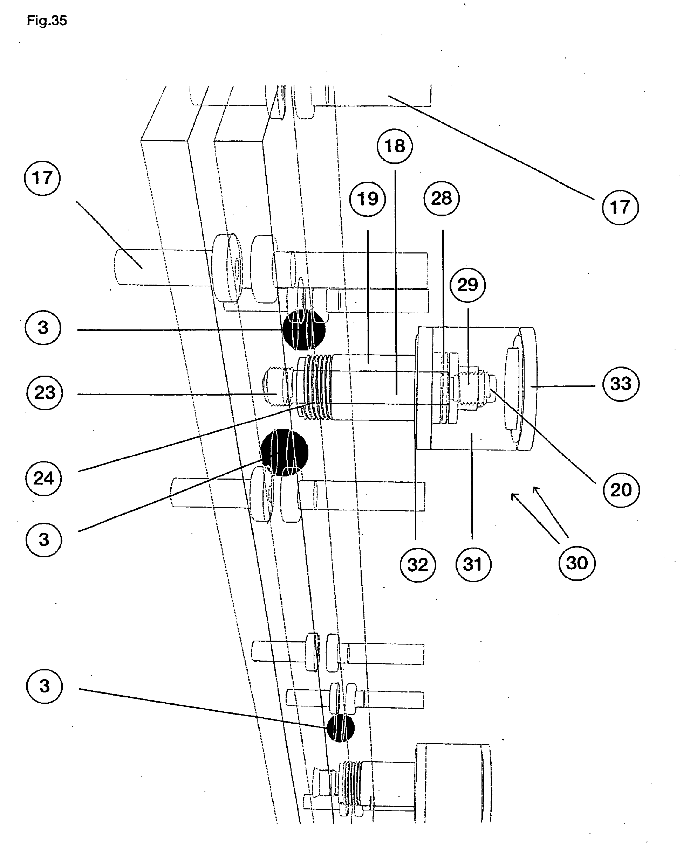

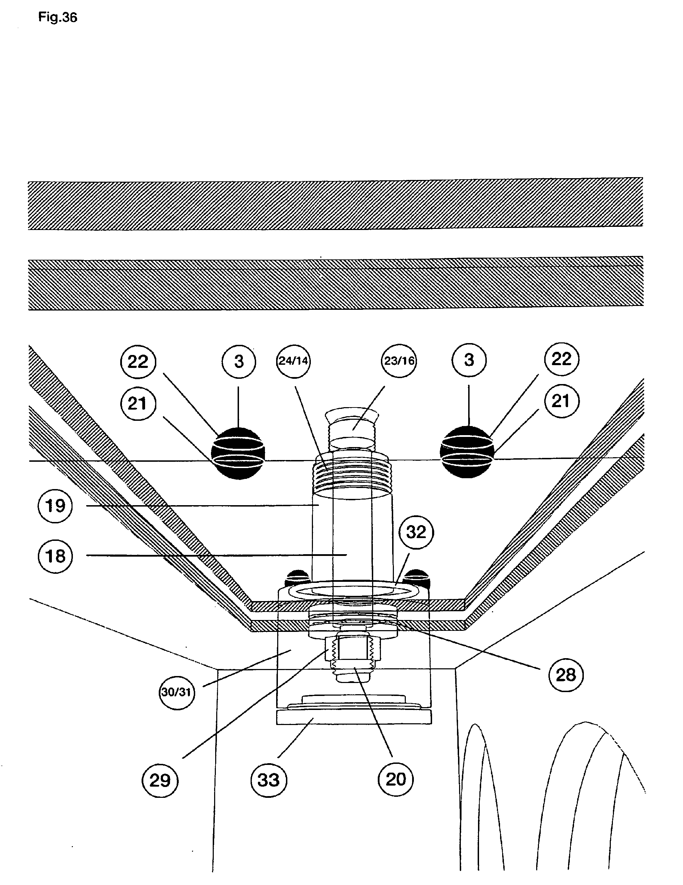

Die Verbindung von erstem Gehäuse 1 und zweitem Gehäuse 2 ist insbesondere den Fig. 31 bis 36 zu entnehmen.

Erkennbar sind die Anschlussplatten 11 und 12 in parallelen Ebenen angeordnet und die erste Anschlussplatte 11 mit der Seitenwand des ersten Gehäuses 1 und die zweite Anschlussplatte 12 mit der Seitenwand des zweiten Gehäuses 2 verbunden. Hierzu sind Schrauben 17 oder ähnliche Befestigungsmittel durch die Befestigungsbohrungen 13 bzw. 15 hindurchgeführt, welche die Anschlussplatten 11 bzw. 12 an den zugeordneten Gehäusen 1, 2 fixieren.

Es ist ferner vorgesehen, dass Keramikkugeln 3 zwischen dem ersten Gehäuse 1 und dem zweiten Gehäuse 2, insbesondere zwischen der ersten Anschlussplatte 11 und der zweiten Anschlussplatte 12, vorgesehen sind. Die Keramikkugeln 3 sind in den dafür vorgesehenen halbkugelförmigen Aussparungen 21, 22 aufgenommen. Die Aussparungen 21, 22 und/oder Keramikkugeln sind derart ausgestaltet, dass stets ein geringfügiger Abstand zwischen den Gehäusen 1, 2, insbesondere den Anschlussplatten 11, 12, verbleibt.

Darüber hinaus sind Verbindungsmittel 4 erkennbar, welche die Verbindung zwischen den Anschlussplatten 11, 12 und damit zwischen den Gehäusen 1, 2 herstellen. Es handelt sich bei den Verbindungsmitteln 4 um eine Zylinder-Bolzen-Kombination, die dazu eingerichtet ist, die Anschlussplatten 11, 12 mit einer vorbestimmten Kraft gegen die zwischen sich befindlichen Keramikkugeln 3 zu pressen. Hierzu weist das Verbindungsmittel einen Bolzen 18, einen den Bolzen 18 zumindest abschnittsweise umgebenden Hohlzylinder 19 und ein Axialkugellager 28 auf. Der Bolzen 18 weist an seinen beiden Enden ein erstes Gewinde 20 und ein zweites Gewinde 23 auf, wohingegen der Hohlzylinder 19 einseitig mit einem Gewinde 24 ausgestattet ist. Der Bolzen 18 ist verschiebbar innerhalb des Hohlzylinders 19 aufgenommen und das erste Gewinde 20 ragt aus dem Hohlzylinder 19 hervor. Auf dem ersten Gewinde 20 wiederum ist eine Mutter 29 angebracht, wobei das Axialkugellager 28 zwischen der Mutter 29 und dem Hohlzylinder 19 angebracht ist.

Die Wirkungsweise des Verbindungsmittels ergibt sich vorteilhafterweise anhand der Einbausituation.

Der Bolzen 18 wird mit seinem zweiten Gewinde 23 in die Verbindungsmittelgewindebohrung 16 der zweiten Anschlussplatte 12 eingeschraubt. Der Bolzen 18 ragt dabei senkrecht von der zweiten Anschlussplatte 12 hervor. Der Hohlzylinder 19 wird mit seinem Gewinde 24 in die Verbindungsmittelgewindebohrung 14 der ersten Anschlussplatte 11 eingeschraubt. Der Hohlzylinder 19 ist dabei senkrecht von der ersten Anschlussplatte 11 ausgerichtet, ragt jedoch in den Innenraum des ersten Gehäuses 1 hinein. Soweit der Bolzen 18 durch den Hohlzylinder 19 hindurchgeführt wird, was letztendlich der Fall ist, wenn die Anschlussplatten 11, 12 parallel zueinander ausgerichtet sind und nur noch einen kleinen Spalt zwischen sich ausbilden, ragt das erste Gewinde 20 aus dem Hohlzylinder 19 hervor. Auf dieses Gewinde 20 wird das Axialkugellager 28 aufgesteckt und anschließend die Mutter 29 auf das Gewinde 20 aufgeschraubt.

Es ist ferner ein Korb 30 vorgesehen, der das Verbindungsmittel 4 luftdicht abschirmt. Hierzu weist der Korb 30 ein hohlzylinderförmiges Gehäuse 31 auf. Auf der einen Seite des Gehäuses 31 ist eine Dichtung 32, vorzugsweise eine O-Ring Dichtung, vorgesehen, die den Korb 30 gegenüber der Gehäusewand abdichtet. Ferner weist der Korb 30 einen Dichtpfropfen 33 auf, der das Gehäuse 31 abdichtet. Der Korb 30 kann einstückig mit dem Hohlzylinder 19 ausgebildet sein.

Es sind entsprechend mehrere, vorzugsweise zwei, der zuvor beschriebenen Verbindungsmittel 4 zur Verbindung der Gehäuse 1, 2, insbesondere der Anschlussplatten 11, 12, vorgesehen. Hierdurch kann eine optimale Verbindung zwischen dem ersten Gehäuse 1 und dem zweiten Gehäuse 2 sichergestellt werden.

Im Ergebnis können die Anschlussplatten 11, 12 durch Anziehen der Muttern 29 aufeinander zu bewegt werden. Hierdurch können die zwischen den Anschlussplatten 11, 12 angeordneten Keramikkugeln 3 eingespannt werden.

Es wird ersichtlich, dass die Verbindungen zwischen den beiden Gehäusen 1, 2 durch die Keramikkugeln 3 gebildet werden. Auch die Verbindungsmittel 4 als solches weisen letztendlich eine Verbindung über Kugelelemente auf, die durch das Axialkugellager 28 bereitgestellt werden.

Es ist ebenfalls vorgesehen, dass die erfindungsgemäße Lautsprecherbox auf Keramikkugel-Stellfüßen 5 abgestellt ist. Die Keramikkugel-Stellfüße 5 weisen ein erstes Stellfußelement 25, sowie ein zweites Stellfußelement 26 auf. Das erste Stellfußelement 25 ist an den Sockel 9 angeschlossen, wohingegen das zweite Stellfußelement 26 zum Aufstellen auf einen Untergrund eingerichtet ist. Zwischen den Stellfußelementen 25, 26 sind entsprechend Keramikkugeln 27 angeordnet.

Die erfindungsgemäße Lautsprecherbox zeichnet sich insbesondere durch weitere nachfolgende Merkmale aus:

Bei dem Gehäusekonzept handelt es sich um ein modulares Gehäusekonzept, umfassend entsprechend ein Tiefton-Gehäuse (erstes Gehäuse 1), ein Mittel-/Hochton-Gehäuse (zweites Gehäuse 2) und einen Sockel 9. Es sind mechanisch getrennte Gehäuse 1, 2 zur Vermeidung gegenseitiger Beeinflussung vorgesehen. Es entsteht eine Minimalschallwand durch seitliche Platzierung des Tieftonchassis 6 zur Minimierung von Kantenreflektionen. Die Schallausbreitung im Bassbereich ist entsprechend nahezu kugelförmig.

Die Aufteilung der Tieftonwiedergabe erfolgt auf vier Tieftonlautsprecher 6, paarweise verteilt auf zwei erste Gehäuse 1, da der Hörraum dadurch an mehreren Punkten angeregt wird.

Es ist eine große Membranfläche des Tieftonlautsprechers 6 für sehr tiefe und extrem klirrarme Basswiedergabe vorgesehen. Durch die große Membranfläche wird nur ein geringer Hub benötigt, was einen geringen Klirrfaktor nach sich zieht, da der Klirrfaktor mit zunehmendem Hub steigt. Die Lautsprecherboxen weisen einen hohen Maximal-Schalldruck von etwa 110 dB bei 35 Hz auf.

Asymmetrische Anordnung von jeweils zwei Tieftonlautsprechern in einem linken und einem rechten ersten Gehäuse 1 zur Vermeidung der Schallabstrahlung auf mittenstehende Objekte (z.B. Rack oder Möbel) und negative Schwingungsübertragung auf Musikquellen (Plattenspieler, CD-Spieler o.ä.).

Die erfindungsgemäße Lautsprecherbox ist zur Ansteuerung der Tieftonlautsprecher mit Poleshift-Filter-Technologie ausgestattet, welche die Verwendung extrem kleiner Tieftongehäuse erlaubt. Charakteristisches Merkmal des Poleshift-Filters nach Siegfried Linkwitz ist die Erzeugung eines linearen Frequenzgangs mittels Anhebung der Amplitudenwerte bei abnehmender Frequenz entsprechend des messtechnischen Verhaltens der Tieftonlautsprecher im eingebauten Zustand. Die im eingebauten Zustand gemessenen Thiele-Small-Parameter des Tieftonlautsprechers (u.a. Einbaugüte Qts, d.h. das Verhältnis von Amplitude zu Frequenzbandbreite, und die Resonanzfrequenz) lassen sich in nahezu jeden Parametersatz zur Berechnung des Poleshift-Filters transformieren.

Es ist ferner vorgesehen, dass das erste Gehäuse 1, insbesondere das Tieftongehäuse, aus schweren Mehrschichtplatten (Multiplex-Platten bestehend aus vielen dünnen Holzlagen) mit Verstrebung in Spanntenbauweise hergestellt ist. Es ist weiterhin vorgesehen, dass das zweite Gehäuse 2, insbesondere das Mittel-/Hochton-Gehäuse, aus leichten Mehrschichtplatten (Verbundplatten bestehend aus Deckschichten aus mitteldichter Faserplatte MDF und wenigen dicken Holzlagen) mit punktuellen Versteifungsstreben hergestellt ist. Der Sockel 9 bildet eine eigenständige Sockeleinheit zur Aufnahme der Stellfüße 5 und der Netzteil- und Leistungselektronik (nicht dargestellt).

Die erfindungsgemäße Lautsprecherbox weist ein optimiertes Eigenresonanzverhalten durch mechanisch getrennte Einzelgehäuse 1, 2, ein Kopplungssystem mittels Keramikkugeln 3 und eine ausgesuchte Materialkombination auf. Durch die hohe Härte der Keramikkugeln 3 und die geringe Kontaktfläche ergibt sich eine definierte Ankoppelung des zweiten Gehäuses 2 an das erste Gehäuse 1, welches sich positiv auf den Klang der Lautsprecherboxen auswirkt.

Die Einzelgehäuse, insbesondere das erste Gehäuse 1 und das zweite Gehäuse 2, weisen berechnete Eigenresonanzen zur Vermeidung gegenseitiger Beeinflussung auf. Das erste Gehäuse 1, insbesondere das Tiefton-Gehäuse, weist eine hohe Eigenresonanz deutlich oberhalb des frequenzbezogenen Einsatzbereichs auf. Das zweite Gehäuse 2, insbesondere das Mittel-/Hochton-Gehäuse, weist eine tiefe Eigenresonanz unterhalb des frequenzbezogenen Einsatzbereichs auf. Beide Gehäuse sind jeweils mit unterschiedlichen Dämpfungsmaterialien bestückt, wobei das erste Gehäuse 1 mit Filz und Noppenschaumstoff, und das zweite Gehäuse 2 mit Filz, Schafswolle und Polyesterwatte bedämpft sind. Durch die Kopplung der Einzelgehäuse, insbesondere des ersten Gehäuses 1 mit dem zweiten Gehäuse 2, mittels Keramikkugel-System ergibt sich eine definierte und reduzierte Schwingungsübertragung, insbesondere ein Resonanzfilter durch berechnete unterschiedliche Eigenresonanzfrequenzen. Auch die Kopplung der Lautsprecherbox an den Fußboden mittels Keramikkugel-Stellfüssen ergibt eine definierte Resonanzübertragung und stabilen Stand.

Die vorgeschlagene Lautsprecherbox ist als teilaktives Lautsprecherkonzept in Modulbauweise ausgestaltet, insbesondere umfassend ein Netzteil, einen Verstärker und eine Frequenzweiche (nicht dargestellt). Es ist ein kompakter Aufbau von Leistungs- und Steuerelektronik als modulare Einschubelektronik vorgesehen. Ferner ist ein Weitbereichstaktnetzteil für unkomplizierten weltweiten Einsatz mit allen Netzspannungen/-frequenzen (100-240 Volt / 45-65 Hz) vorgesehen, welches vorzugsweise in den Sockel eingebaut ist. Der Leistungsverstärker ist in Digitalmodul-Bauweise mit sehr kleinen Abmessungen und geringer Abwärme bei sehr hohem Wirkungsgrad (ca. 90%; konventionelle Verstärker im Vergleich = ca. 60%) ausgestaltet und vorzugsweise ebenfalls in den Sockel eingebaut. Eine Raumanpassung für unterschiedliche Raumgrößen und Raumhärten mittels teilaktiver Verstärkerelektronik, regelbar über eine spezielle Steuerelektronik, welche vorzugsweise in den Sockel eingebaut ist, ist ebenfalls vorgesehen. Darüber hinaus ist eine Kabelfernbedienung (nicht dargestellt) mit Display zur einfachen Anpassung des Lautsprechers an den Hörraum bzw. die Hörgewohnheiten vorgesehen. Auch ist eine Frequenzweiche (nicht dargestellt) mit selektierten und höchstwertigen Bauteilen als eigenständiges Modul, vorzugsweise in dem Mittel-/Hochton-Gehäuse eingebaut.

## Patentansprüche

1. Lautsprecherbox, umfassend mindestens
- ein erstes Gehäuse (1) und ein zweites Gehäuse (2), wobei
- das erste Gehäuse (1) mit mindestens einem Tieftonlautsprecher (6) und das zweite Gehäuse (2) mit mindestens einem Hochtonlautsprecher (8) und/oder einem Mitteltonlautsprecher (7) ausgestattet ist, wobei
- das zweite Gehäuse (2) mit dem ersten Gehäuse (1) verbunden ist,
**dadurch gekennzeichnet, dass**
- das erste Gehäuse (1) und das zweite Gehäuse (2) in einer Gebrauchsstellung jeweils eine vertikale Anschlussplatte (11, 12) aufweisen, wobei
- zwischen dem ersten Gehäuse (1) und dem zweiten Gehäuse (2) mindestens ein Keramikelement (3) vorgesehen ist, wobei
- es sich bei dem Keramikelement um eine Keramikkugel handelt, wobei
- das mindestens eine Keramikelement zwischen den vertikalen Anschlussplatten (11, 12) angeordnet ist.

2. Lautsprecherbox nach einem der vorhergehenden Ansprüche, **dadurch gekennzeichnet, dass** die Lautsprecherbox einen Sockel (9) aufweist, wobei das erste Gehäuse (1) mit dem Sockel (9) verbunden ist.

3. Lautsprecherbox nach einem der vorhergehenden Ansprüche, **dadurch gekennzeichnet, dass** vier Keramikkugeln (3) zwischen den Gehäusen (1, 2) vorgesehen sind.

4. Lautsprecherbox nach einem der vorhergehenden Ansprüche, **dadurch gekennzeichnet, dass** das erste Gehäuse (1) mit mindestens einer halbkugelförmigen Aussparung (21) und das zweite Gehäuse (2) mit mindestens einer halbkugelförmigen Aussparung (22) ausgestattet ist, die eine Aufnahme für eine Keramikkugel (3) bilden.

5. Lautsprecherbox nach Anspruch 4, wobei das erste Gehäuse (1) mit einer ersten Anschlussplatte (11) ausgestattet ist, wobei das zweite Gehäuse (2) mit einer zweiten Anschlussplatte (12) ausgestattet ist, wobei die mindestens eine halbkugelförmige Aussparung (21) in der ersten Anschlussplatte (11) vorgesehen ist, wobei die mindestens eine halbkugelförmige Aussparung (22) in der zweiten Anschlussplatte (12) vorgesehen ist.

6. Lautsprecherbox nach einem der vorhergehenden Ansprüche, **dadurch gekennzeichnet, dass** mindestens ein Verbindungsmittel (4) zur Verbindung des ersten Gehäuses (1) mit dem zweiten Gehäuse (2) vorgesehen ist.

7. Lautsprecherbox nach Anspruch 6, **dadurch gekennzeichnet, dass** das Verbindungsmittel (4) einen Bolzen (18), einen Hohlzylinder (19), ein Axialkugellager (28) und eine Mutter (29) aufweist, wobei der Hohlzylinder (19) mit einem Gehäuse, vorzugsweise dem ersten Gehäuse (1), verbunden ist, wobei der Bolzen (18) mit dem anderen Gehäuse, vorzugsweise dem zweiten Gehäuse (2), verbunden ist, wobei der Bolzen (18) verschiebbar innerhalb des Hohlzylinders (19) aufgenommen ist und ein Ende mit einem ersten Gewinde (20) aufweist, welches aus dem Hohlzylinder (19) hervorsteht, wobei eine Mutter (29) auf dem Gewinde (20) aufgeschraubt ist, wobei das Axialkugellager (28) zwischen der Mutter (29) und dem Hohlzylinder (19) angeordnet ist.

8. Lautsprecherbox nach einem der Ansprüche 6 oder 7, **dadurch gekennzeichnet, dass** das Verbindungsmittel mit einem Korb (30) zum luftdichten Verschluss des Gehäuses (1, 2) im Bereich des Verbindungsmittels (4) ausgestattet ist.

9. Lautsprecherbox nach Anspruch 8, **dadurch gekennzeichnet, dass** der Korb (30) eine Anlagefläche mit einer Dichtung (32), ein hohlzylinderförmiges Gehäuse (31) und einen Pfropfen (33) zum Abdichten des Korbes aufweist.

10. Lautsprecherbox nach einem der vorhergehenden Ansprüche, **dadurch gekennzeichnet, dass** die Lautsprecherbox mit Keramikkugel-Stellfüßen (5) ausgestattet ist.

11. Lautsprecherbox nach Anspruch 10, **dadurch gekennzeichnet, dass** die Keramikkugel-Stellfüße (5) ein erstes Stellfußelement (25), sowie ein zweites Stellfußelement (26) aufweisen, wobei das erste Stellfußelement (25) an den Sockel (9) angeschlossen ist, wohingegen das zweite Stellfuß-Element (25) zum Aufstellen auf einen Untergrund eingerichtet ist, wobei zwischen den Stellfußelementen (25, 26) mindestens ein Keramikelement (27), vorzugsweise mindestens eine Keramikkugel, angeordnet ist.

12. Lautsprecherbox nach einem der vorhergehenden Ansprüche, **dadurch gekennzeichnet, dass** das erste Gehäuse (1) aus schweren Mehrschichtplatten (Multiplex-Platten bestehend aus vielen dünnen Holzlagen), insbesondere mit Verstrebung in Spanntenbauweise ausgestaltet ist.

13. Lautsprecherbox nach einem der vorhergehenden Ansprüche, **dadurch gekennzeichnet, dass** das zweite Gehäuse (2) aus leichten Mehrschichtplatten (Verbundplatten bestehend aus Deckschichten aus mitteldichter Faserplatte MDF und wenigen dicken Holzlagen) mit punktuellen Versteifungsstreben hergestellt ist.

14. Lautsprecherbox nach einem der Ansprüche 2-13, **dadurch gekennzeichnet, dass** der Sockel (9) als eigenständige Sockeleinheit zur Aufnahme der Stellfüße (5) und einer Netzteil-, Leistungs- und Steuerelektronik ausgestaltet ist.

15. Lautsprecherbox nach einem der vorhergehenden Ansprüche, **dadurch gekennzeichnet, dass** das erste Gehäuse (1), insbesondere das Tiefton-Gehäuse, eine hohe Eigenresonanz, deutlich oberhalb des frequenzbezogenen Einsatzbereichs aufweist, wobei das zweite Gehäuse (2), insbesondere das Mittel-/Hochton-Gehäuse, eine tiefe Eigenresonanz unterhalb des frequenzbezogenen Einsatzbereichs aufweist.

16. Lautsprecherbox nach einem der vorhergehenden Ansprüche, **dadurch gekennzeichnet, dass** mindestens ein Gehäuse (1, 2) - mit einem Dämpfungsmaterial, insbesondere Filz, Schafswolle, Polyesterwatte und/oder Noppenschaumstoff, bestückt ist.

17. Lautsprecherbox nach einem der vorhergehenden Ansprüche, **dadurch gekennzeichnet, dass** eine asymmetrische Anordnung von jeweils zwei Tieftonlautsprechern (6) in einem linken und einem rechten ersten Gehäuse (1) vorgesehen ist.

18. Lautsprecherbox nach einem der vorhergehenden Ansprüche, **dadurch gekennzeichnet, dass** die Lautsprecherbox zur Ansteuerung der Tieftonlautsprecher (6) mit einer Poleshift-Filter-Technologie ausgestattet ist.

## Claims

1. A loudspeaker cabinet, comprising at least:
- a first housing (1) and a second housing (2), wherein
- the first housing (1) is equipped with at least one low-frequency loudspeaker (6) and the second housing (2) is equipped with at least one high-frequency loudspeaker (8) and/or a mid-frequency loudspeaker (7), wherein
**characterized in that**
- the second housing (2) is connected to the first housing (1),
- the first housing (1) and the second housing (2) each have a vertical connecting plate (11, 12) in an operative position, wherein
- at least one ceramic element (3) is provided between the first housing (1) and the second housing (2), wherein
- the ceramic element is a ceramic ball, wherein
- the at least one ceramic element is arranged between the vertical connecting plates (11, 12).

2. The loudspeaker cabinet according to any one of the preceding claims, **characterized in that** the loudspeaker cabinet has a base (9), wherein the first housing (1) is connected with the base (9).

3. The loudspeaker cabinet according to any one of the preceding claims, **characterized in that** four ceramic balls (3) are provided between the housings (1, 2).

4. The loudspeaker cabinet according to any one of the preceding claims, **characterized in that** the first housing (1) is equipped with at least one hemispherical recess (21) and the second housing (2) is equipped with at least one hemispherical recess (22), which forms a socket for the ceramic ball (3).

5. The loudspeaker cabinet according to claim 4, wherein the first housing (1) is equipped with a first connecting plate (11), wherein the second housing (2) is equipped with a second connecting plate (12), wherein the at least one hemispherical recess (21) is provided in the first connecting plate, wherein the at least one hemispherical recess (22) is provided in the second connecting plate (12).

6. The loudspeaker cabinet according to any one of the preceding claims, **characterized in that** at least one connecting means (4) is provided for connecting the first housing (1) and the second housing (2).

7. The loudspeaker cabinet according to claim 6, **characterized in that** the connecting means (4) comprises a bolt (18), a hollow cylinder (19), an axial ball bearing (28) and a nut (29), wherein the hollow cylinder (19) is connected to a housing, preferably the first housing (1), wherein the bolt (18) is connected to the other housing, preferably the second housing (2), wherein the bolt (18) is displaceably received within the hollow cylinder (19) and one end thereof has a first thread (20) that protrudes from the hollow cylinder (19), wherein a nut (29) is screwed onto the thread (20), wherein the axial ball bearing (28) is arranged between the nut (29) and the hollow cylinder (19).

8. The loudspeaker cabinet according to any one of claims 6 or 7, **characterized in that** the connecting means is equipped with a cage (30) for the air-tight closure of the housing (1, 2) in the area of the connecting means (4).

9. The loudspeaker cabinet according to claim 8, **characterized in that** the cage (30) has a contacting surface with a gasket (32), a hollow cylindrical housing (31) and a plug (33) for sealing the cage.

10. The loudspeaker cabinet according to any one of the preceding claims, **characterized in that** the loudspeaker cabinet is equipped with ceramic ball feet (5).

11. The loudspeaker cabinet according to claim 10, **characterized in that** the ceramic feet (5) comprise a first foot element (25) and a second foot element (26), wherein the first foot element (25) is connected to the base (9), whereas the second foot element (25) is adapted for placement on a support surface, wherein at least one ceramic element (27), preferably at least one ceramic ball, is arranged between the foot elements (25, 26).

12. The loudspeaker cabinet according to any one of the preceding claims, **characterized in that** the first housing (1) is made of heavy multi-layered panels (multiplex panels of many thin wood layers), in particular with struts in a frame construction.

13. The loudspeaker cabinet according to any one of the preceding claims, **characterized in that** the second housing (2) is made of light multi-layered panels (composite panels of surface layers of medium-density fiber plates MDF and few thick wood layers) with point-like stiffening struts.

14. The loudspeaker cabinet according to any one of claims 2 to 13, **characterized in that** the base (9) is configured as an independent base unit for receiving the feet (5) and power supply unit electronics, power electronics and control electronics.

15. The loudspeaker cabinet according to any one of the preceding claims, **characterized in that** the first housing (1), in particular the low-frequency housing, has high self-resonance, substantially above the operative frequency range, wherein the second housing (2), in particular the mid-/ high-frequency housing, has a low self-resonance below the operative frequency range.

16. The loudspeaker cabinet according to any one of the preceding claims, **characterized in that** at least one housing (1, 2) is equipped with a damping material, in particular felt, sheep's wool, polyester wool and/or knobbed foam.

17. The loudspeaker cabinet according to any one of the preceding claims, **characterized in that** an asymmetrical arrangement of two low-frequency loudspeakers (6) each is provided in a left and a right first housing (1).

18. The loudspeaker cabinet according to any one of the preceding claims, **characterized in that** the loudspeaker cabinet is equipped with pole-shift filter technology for driving the low-frequency loudspeaker (6).

## Revendications

1. Enceinte acoustique comprenant au moins
- un premier boîtier (1) et un deuxième boîtier (2),
- le premier boîtier (1) étant équipé d'au moins un haut-parleur de graves (6) et le deuxième boîtier (2) d'au moins un haut-parleur d'aigus (8) et/ou d'un haut-parleur pour fréquences moyennes (7),
- le deuxième boîtier (2) étant relié au premier boîtier (1),
**caractérisée en ce que**
- le premier boîtier (1) et le deuxième boîtier (2) présentent, dans une position d'utilisation, respectivement une plaque de raccordement verticale (11, 12),
- entre le premier boîtier (1) et le deuxième boîtier (2) étant prévu au moins un élément céramique (3),
- l'élément céramique étant une boule en céramique,
- ledit au moins un élément céramique étant disposé entre les plaques de raccordement verticales (11, 12).

2. Enceinte acoustique selon l'une des revendications précédentes, **caractérisée en ce que** l'enceinte acoustique présente un socle (9), le premier boîtier (1) étant relié au socle (9).

3. Enceinte acoustique selon l'une des revendications précédentes, **caractérisée en ce que** quatre boules en céramique (3) sont prévues entre les boîtiers (1, 2).

4. Enceinte acoustique selon l'une des revendications précédentes, **caractérisée en ce que** le premier boîtier (1) est équipé d'au moins un évidement hémisphérique (21) et le deuxième boîtier (2) d'au moins un évidement hémisphérique (22), lesquels forment un logement pour une boule en céramique (3).

5. Enceinte acoustique selon la revendication 4, dans laquelle le premier boîtier (1) est équipé d'une première plaque de raccordement (11) et le deuxième boîtier (2) est équipé d'une deuxième plaque de raccordement (12), ledit au moins un évidement hémisphérique (21) étant prévu dans la première plaque de raccordement (11) et ledit au moins un évidement hémisphérique (22) étant prévu dans la deuxième plaque de raccordement (12).

6. Enceinte acoustique selon l'une des revendications précédentes, **caractérisée en ce qu'**il est prévu au moins un moyen de fixation (4) permettant de fixer le premier boîtier (1) au deuxième boîtier (2).

7. Enceinte acoustique selon la revendication 6, **caractérisée en ce que** le moyen de fixation (4) présente un boulon (18), un cylindre creux (19), un roulement axial à billes (28) et un écrou (29), le cylindre creux (19) étant relié à un boîtier, de préférence au premier boîtier (1), le boulon (18) étant relié à l'autre boîtier, de préférence au deuxième boîtier (2), le boulon (18) étant logé à l'intérieur du cylindre creux (19) de manière à pouvoir se déplacer et présentant une extrémité avec un premier filetage (20) qui dépasse du cylindre creux (19), un écrou (29) étant vissé sur le filetage (20), le roulement axial à billes (28) étant disposé entre l'écrou (29) et le cylindre creux (19).

8. Enceinte acoustique selon l'une des revendications 6 ou 7, **caractérisée en ce que** le moyen de fixation est équipé d'une cage (30) permettant de fermer hermétiquement le boîtier (1, 2) dans la zone du moyen de fixation (4).

9. Enceinte acoustique selon la revendication 8, **caractérisée en ce que** la cage (30) présente une surface d'appui avec un joint d'étanchéité (32), un boîtier (31) en forme de cylindre creux et un bouchon (33) permettant de fermer la cage.

10. Enceinte acoustique selon l'une des revendications précédentes, **caractérisée en ce que** l'enceinte acoustique est équipée de pieds de pose (5) pourvus de boules en céramique.

11. Enceinte acoustique selon la revendication 10, **caractérisé en ce que** les pieds de pose (5) pourvus de boules en céramique présentent un premier élément de pied de pose (25) ainsi qu'un deuxième élément de pied de pose (26), le premier élément de pied de pose (25) étant raccordé au socle (9) alors que le deuxième élément de pied de pose (25) est conçu pour être posé sur un sol, au moins un élément céramique (27), de préférence au moins une boule en céramique, étant disposé entre lesdits éléments de pied de pose (25, 26).

12. Enceinte acoustique selon l'une des revendications précédentes, **caractérisée en ce que** le premier boîtier (1) est équipé de panneaux multicouches lourds (panneaux multiplex constitués de nombreuses fines couches de bois), notamment avec des supports de renforcement sous forme de membrures.

13. Enceinte acoustique selon l'une des revendications précédentes, **caractérisée en ce que** le deuxième boîtier (2) est fabriqué en panneaux multicouches légers (panneaux composites constitués de couches de recouvrement en panneau de fibres de densité moyenne (MDF) et d'un petit nombre de couches de bois épaisses) avec des supports de renforcement ponctuels.

14. Enceinte acoustique selon l'une des revendications 2 à 13, **caractérisée en ce que** le socle (9) est formé, en tant qu'unité autonome, de manière à recevoir les pieds de pose (5) ainsi qu'un système électronique de bloc d'alimentation, de puissance et de commande.

15. Enceinte acoustique selon l'une des revendications précédentes, **caractérisée en ce que** le premier boîtier (1), notamment le boîtier du haut-parleur de graves, présente une résonance propre haute, située nettement au-dessus du secteur d'opération, la deuxième boîtier (2), notamment l'boîtier du haut-parleur pour fréquences moyennes/hautes, présentant une résonance propre basse, située au-dessous de la plage de fréquences d'utilisation.

16. Enceinte acoustique selon l'une des revendications précédentes, **caractérisée en ce qu'**au moins un boîtier (1, 2) est équipé d'un matériau d'amortissement, notamment du feutre, de la laine de mouton, de la ouate de polyester et/ou de la mousse alvéolée des noppes.

17. Enceinte acoustique selon l'une des revendications précédentes, **caractérisée en ce qu'**il est prévu une disposition asymétrique de deux haut-parleurs de graves (6) chacun dans des premiers boîtiers (1) gauche et droite.

18. Enceinte acoustique selon l'une des revendications précédentes, **caractérisée en ce que** l'enceinte acoustique est équipée d'une technologie de filtre à déplacement des pôles (Pole Shift) pour activer les haut-parleurs de graves (6).
